Europäisches Patentamt

European Patent Office

Office européen des brevets

(19)

(11) **EP 1 233 338 A2**

(12) **EUROPEAN PATENT APPLICATION**

(43) Date of publication:
21.08.2002 Bulletin 2002/34

(51) Int Cl.⁷: **G06F 9/45**

(21) Application number: 02100114.4

(22) Date of filing: 07.02.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: 07.02.2001 US 778424

(71) Applicant: **Sun Microsystems, Inc.**
**Palo Alto, California 94303 (US)**

(72) Inventor: **Park, Joseph C.H.**
**CA 95070, Saratoga (US)**

(74) Representative: **Weihs, Bruno**
**Rosenthal & Osha S.A.R.L.**
**121, avenue des Champs Elysées**
**75008 Paris (FR)**

(54) **Method for transforming predicated execution to static speculation**

(57)    A method and apparatus involving an extensible rule -based technique for optimizing predicated code is disclosed. The technique includes if -converting an abstract internal representation and mapping the if-conversion to a machine representation. The technique may include eliminating predicates from the mapped if-conversion. The eliminating of predicates may include eliminating a predicate defining instruction by interpretation; eliminating a guarding predicate of a safe instruction by speculation; eliminating a guarding predicate of an unsafe instruction by compensation; and eliminating a guarding predicate of an unsuitable instruction by reverse if-conversion. The technique may include optimizing the machine repre sentation.

Figure 3

EP 1 233 338 A2

## Description

BACKGROUND OF THE INVENTION

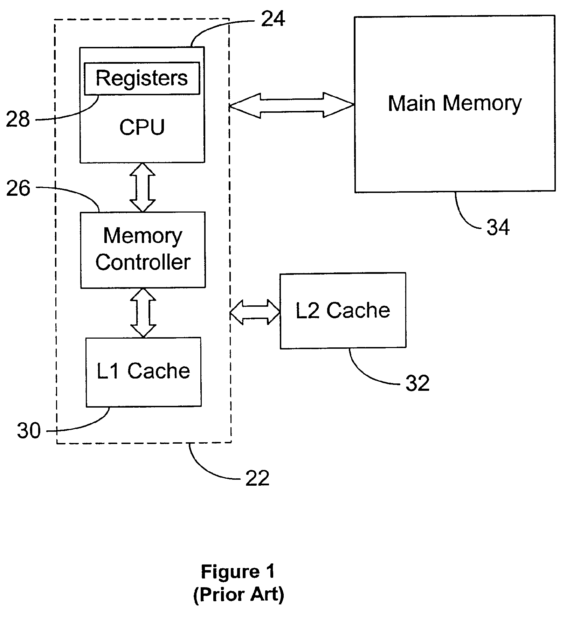

Computer processors comprise arithmetic, logic, and control circuitry that interpret and execute instructions from a computer program. R eferring to Figure 1, a typical computer system includes a microprocessor (22) having, among other things, a CPU (24), a memory controller (26), and an on -chip cache memory (30). The microprocessor (22) is connected to external cache memory (32) and a main memory (34) that both hold data and program instructions to be executed by the microprocessor (22). Internally, the execution of program instructions is carried out by the CPU (24). Data needed by the CPU (24) to carry out an instruction are fetched by the memory controller (26) and loaded into internal registers (28) of the CPU (24). Upon command from the CPU (24) requiring memory data, the fast on -chip cache memory (30) is searched. If the data is not found, then the external cache memory (32) and t he slow main memory (34) is searched in turn using the memory controller (26). Finding the data in the cache memory is referred to as a "hit." Not finding the data in the cache memory is referred to as a "miss."

The time between when a CPU requests data and when the data is retrieved and available for use by the CPU is termed the "latency" of the system. If requested data is found in cache memory, *i.e.*, a data hit occurs, the requested data can be accessed at the speed of the cache and the latency of the system is reduced. If, on the other hand, the data is not found in cache, *i.e.*, a data miss occurs, and thus the data must be retrieved from the external cache or the main memory at increased latencies.

In the pursuit of improving processor performanc e, designers have sought two main goals: making operations faster and executing more operations in parallel. Making execution faster can be approached in any combination of several ways. For example, the underlying semiconductor process involving signal propagation delay can be improved. Pipelining execution with deeper pipelines involving more stages (super pipelining) can be implemented. Multiple operations can be issued onto multiple pipelines (superscalar design). Compiler transformations that reorder instructions (instruction scheduling) or other techniques allowing more operations to execute in parallel, *i.e.*, to increase instruction-level parallelism (ILP), may be implemented.

In pipelining, the execution of an instruction is subdivided into seve ral steps, called stages. Instructions are processed through each stage in succession, overlapping execution of an instruction in one stage with that of next instruction in earlier stage. Since operations execute in many stages concurrently the rate of execution (throughput) is increased.

The time one stage takes determines the cycle time, or its inverse, the clock rate of a processor. If a pipeline is kept full without disruptions (stalls) instructions can finish at the rate of one per cycle. In additi on, in a superscalar pipelined processors multiple instructions up to the issue width (called scalarity) can finish per cycle. Thus, by multiple issue and pipelining the peak performance is increased by a factor, the number of stages multiplied by the issu e width. During such peak large number of instructions close to this factor are executing concurrently. This concurrent execution of many instructions (said to be "in flight") gives rise to the speedup achieved.

The process of retrieving instructions fro m memory is called instruction fetching. In addition to the processor cycle time, the rate at which instructions can be fetched and decoded is critical to processor performance. Instruction buffer is introduced between the fetch pipeline (frontend) and the execution pipeline (backend) so that stall in one end does not cause stall in the other end. Both pipelines consist of multiple stages achieving a high clock rate.

Instructions are continuously processed by fetch pipeline and buffered into the instruction buffer. Simultaneously the execution pipeline processes instructions from the instruction buffer. A peak performance can result if the rate at which instructions enter the buffer (fetch rate) matches the rate at which instructions leave the buffer (e xecution rate).

The peak performance, in practice, cannot be sustained because of pipeline stalls. Three major source of stalls are changes in program flow, hardware resource conflicts, and data dependencies.

Changes in program flow occur due to branch in structions that cause changes in direction (whether a branch is taken or not), and destinations (the target of a branch), if taken. Since the instruction fetching that carries out branching must occur in the frontend, at a stage in the fetch pipeline, whe reas the resolution, or the outcome of a branch instruction, is known at a later stage in the execution pipeline, instruction fetching must resort to branch prediction schemes for predicting branch outcome without having to wait for subsequent resolution.

When a prediction agrees with its subsequent resolution, fetching continues without disruption. When a prediction is resolved to be incorrect, fetching must pause in order to remove (flush) all instructions in flight incorrectly fetched and begin fetching the new correct sequence of instructions. The extra cycles taken thus to recover from a misprediction are called misprediction penalty. As the depth of a pipeline is increased (to increase the clock rate), the branch misprediction penalty increases in p roportion causing a major performance degradation.

Because of its critical impact on performance, branch prediction techniques have been studied extensively over the years in a variety of schemes. Dynamic branch prediction relies only on run -time behavior of branch. Static and dynamic combined techniques involve compiler transformations (static) that selectively eliminate branching and reorganize code to improve performance. The static techniques may also resort to modified branch instructions with a pre diction hint bit, such as predict taken or predict not -taken.

One leading example of dynamic branch prediction technique is the so - called GSHARE prediction scheme. This technique exploits the property of branch, often observed, that branching is correlate d with its past behavior (at run time) and the behavior of earlier neighboring branches. Thus, the global history (behavior of a fixed number of neighboring branches) is combined with a specified number of low-order address bits of a branch to index a 2 -bit entry in a branch prediction table. The 2 -bit entry is used to distinguish four cases (states), taken and not-taken, each of weak and strong variety. Depending on the current state, the branch is either predicted taken or not -taken. Both the global h istory and the entry is updated according to the outcome. The state is changed from taken to not - taken and vice versa, only if two consecutive mispredictions occur. This scheme improves the predication rate of loop branches. Such dynamic schemes have th e advantage of being adaptive to different behaviors of branch due to changes in input data characteristics.

High performance processors involve increasingly wider issue width. To match the resulting increase in execution rate, the fetch rate (fetch bandwi dth) must increase. One is soon led to having to predict more than one branch per cycle. The trace cache techniques are designed to meet this requirement.

A trace is a sequence of instructions corresponding to an execution path across multiple branch instructions. A trace is thus characterized by its beginning point and a consecutive number of branch outcomes contained in it. In a processor equipped with a trace cache, the conventional instruction cache is replaced by the trace cache storing traces. Accor dingly the unit of prediction is not a basic block corresponding to a single branch but the entire trace involving multiple branch instructions. The fetch bandwidth is significantly increased thus by dealing with trace rather than with an individual branch .

There are several additional benefits inherent in trace cache. The detrimental effect (taken-branch penalty) of taken branch is eliminated, since widely separated basic blocks appear contiguous in a trace. In addition, if one is dealing with complex instruction set architecture (CISC) the overhead of translating CISC instruction to internal micro -operation is reduced by storing trace cache of translated code. Repeated translations are avoided, if traces are found.

In addition to changes in program flow ( discussed), resource conflicts and data dependencies contribute to pipeline stalls. Resource conflicts occur, since a given processor consists of a fixed number of pipelines in a particular mix in pipeline types. For example, a processor may consist of six pipelines in the mix of two integer, two floating-point, one memory, and one branch type, against which up to four independent instructions of matching type can be grouped and dispatched per cycle

In an in-order processor instructions are grouped in the program order, that is, the order of instructions determined by the compiler. A mismatch between resource requirement patterns of instructions and available pipelines causes break in grouping and idle cycles in pipelines. Furthermore, since the execution of an instruction cannot proceed unless operand data required are ready, an instruction (consumer) dependent on earlier instruction (producer) can cause stall depending on the latency of producer instruction. For example, if the producer instruction is a memory read operation (load), then the stall cycles between produce consumer pair can be large including various cache miss penalties.

Compilers perform instruction scheduling to rearrange instructions to minimize idle issue slots due to resource conflicts and hide the latency between producer and consumer pairs by filling with other independent instructions. Clearly such compiling (static) techniques depend on the processor model and latencies assumed at compiler time.

In an out-of-order processor, the processor rearranges instructions dynamically by issuing independent instructions regardless of the program order. For example, in the load-use stall mentioned above the load instruction can issue earlier than in the program order thus having a similar effect as static scheduling. All instructions, however, must retire in the same order as the program order in order to preserve program correctness, maintain precise exceptions, and to recover from mispredicted speculative execution. This reordering requirement increases hardware complexity of an out-of-order processor when compared to in-order kind.

The dynamic technique has the advantage of dynamically adapting to changes in machine model and latencies without having to recompile. Speedup can result in processing binaries of old models. However, the size of window (instruction buffer) from which instructions are issued and the processing time limits the effectiveness. Since compiling techniques are without such limitation in size or processing time, one resorts to recompiling for higher performance in out - of-order as well as in -order processors.

More recently, in order to improve instruction -level parallelism beyond that attainable using traditional approaches, more aggressive techniques, namely, predicated execution (predication, for short) and static speculation techniques, have begun to be investigated.

Predication is a form of conditional execution, in which instructions can be guarded with predicates. Predicates are special 1 -bit registers that can be set true (1) or false (0) using predicate setting instructions. During execution an instruction behaves normally when the guarding predicate has true value. When the guarding predicate has false value, the instruction has no semantic effect (that is, does not modify architectural state) as if the instruction is conditionally skipped.

Predication allows for branch elimination leading to larger basic blocks and more effective instruction scheduling. Furthermore, branch misprediction penalties and taken-branch penalties are naturally avoided.

The process of eliminating branch instructions using predication is known as "if-conversion". This process transforms a code including branch instructions into a predicated code without branching. In the predicated code instructions, including the predicate setting instructions introduced, are guarded by appropriately assigned predicates. An optimal if-conversion technique must minimize the number of predicates in use as well as the number of predicate setting instructions introduced.

Formally, if-conversion transforms control dependence caused by branching into data dependence through predicates. Since the control dependence is removed, the outcome is closer to pure data flow in its new form. This new form facilitates various instruction scheduling techniques giving rise to improved performance.

Dependencies, in general, hinder code motion and constrain instruction scheduling. Speculative execution (speculation, for short) overcomes such limitations by violating certain depend encies.

There are two kinds of speculation, control kind and data kind.

The branch prediction is a dynamic form of control speculation. One is predicting the outcome of a branch and executing instructions speculating that the prediction is correct. As discussed earlier this technique incurs misprediction penalties when the prediction turns out to be incorrect.

In static control speculation, on the other hand, compiler moves instructions above "guarding" branch. In this form, one is executing instructions sp eculating that the results produced by speculated instructions are ultimately used. If the results are not used, the execution of "unused" instructions can cause performance penalties.

In the static speculation of data kind, a memory read instruction (load ) is commuted past a memory write instruction (store) that may or may not conflict. At compile time not every load -store pair can be disambiguated to prove that the pair is independent. To be safe a compiler must make a conservative decision of assuming the pair is dependent. Static speculation of data kind overcomes such data dependence by optimistically removing it. This allows load to move freely past store.

The speculated load must be distinguished from ordinary load so that special actions can take place in order to detect incorrect speculation and to perform recovery on detecting an incorrect speculation. The recovery may include re-issuing the load to take into account the effect of store operations detected to be interfering. Such corrective actio ns incur performance penalties.

The goal of speculation, whether dynamic or static, whether of control or of data kind, is to increase parallelism beyond offsetting penalties, inherent in speculation, to achieve a net gain in performance.


SUMMARY OF THE INVENTION

In general, in one aspect, an extensible rule -based technique for optimizing predicated code, comprises if-converting an abstract internal representation; and mapping the if-conversion to a machine representation. In accordance with one or more embodiments, the technique may further comprise eliminating predicates from the mapped if-conversion. The eliminating of predicates may comprise eliminating a predicate defining instruction by interpretation. The eliminating of predicates may comprise eliminating a guarding predicate of a safe instruction by speculation. The eliminating of predicates may comprise eliminating a guarding predicate of an unsafe instruction by compensation. The eliminating of predicates may comprise eliminating a guarding p redicate of an unsuitable instruction by reverse if-conversion. The technique may further comprise optimizing the machine representation.

In general, in one aspect, an extensible rule -based system for optimizing predicate code, comprises a processor for executing instructions; and an instruction. The instruction is for defining predicates; testing a branch instruction; and assigning a defined predicate to the branch instruction based on a result of the test.

In general, in one aspect, an extensible rul e-based method for optimizing predicate code comprises defining a predicate; testing a branch instruction; and selectively assigning the defined predicate to the branch instruction based on a result of the test.

In general, in one aspect, an apparatus for optimizing predicate code, comprises means for if-converting an abstract internal representation; and means for mapping the if-conversion to machine representation. In accordance with one or more embodiments, the apparatus may further comprise means fo r eliminating predicates from the mapped if-conversion. The eliminating of predicates may comprise means for eliminating a predicate defining instruction by interpretation. The eliminating of predicates may comprise means for eliminating a guarding predicate of a safe instruction by speculation. The eliminating of predicates may comprise means for eliminating a guarding predicate of an unsafe instruction by compensation. The eliminating of predicates may comprise means for eliminating a guarding predicate of an unsuitable instruction by reverse if-conversion. The apparatus may further comprise means for optimizing the machine representation.

In general, in one aspect, an extensible rule -based technique for optimizing predicated code, comprises if-converting an abstract internal representation; mapping the if-conversion to a machine representation; eliminating predicates from the mapped if-conversion; and optimizing the machine representation. The eliminating of predicates comprises eliminating a p redicate defining instruction by interpretation; eliminating a guarding predicate of a safe instruction by speculation; eliminating a guarding predicate of an unsafe instruction by compensation; eliminating a guarding predicate of an unsuitable instruction by reverse if-conversion.

In general, in one aspect, a technique of supporting predicated execution without explicit predicate hardware, comprising implementing a test branch instruction. In accordance with one or more embodiments, the test branch instruction may convert a branching condition based on condition codes to Boolean data in a general register so that a full logical instruction set can be used to produce optimal code.

In general, in one aspect, a system of supporting predicated execution without explicit predicate hardware, comprises a processor for executing instructions; and an instruction for converting a branching condition based on condition codes to Boolean data in a general register so that a full logical instruction set produces op timal code; and guarding a set of instructions unsuitable to speculate enclosed by a branch.

In general, in one aspect, a method of supporting predicated execution without explicit predicate hardware comprises implementing a test branch instruction. In accordance with one or more embodiments, the test branch instruction may convert a branching condition based on condition codes to Boolean data in a general register so that a full logical instruction set can be used to produce optimal code.

In general, in one aspect, an apparatus of supporting predicated execution without explicit predicate hardware comprises means for implementing a test branch instruction; and means for eliminating predicates using the implemented test branch instruction. Other aspects and advantages of the invention will be apparent from the following description and the appended claims.

BRIEF DESCRIPTION OF THE DRAWINGS

Figure 1 is a block diagram of a prior art computer system.
Figure 2 is a block diagram of an embodiment of the pr esent invention.
Figure 3 is a flow chart describing a process in accordance with an embodiment of the present invention.
Figure 4 shows an innermost loop.
Figure 5 shows an internal Representation of Loop Body prior to If - conversion.
Figure 6 shows a Loop Body predicated in Abstract IR, AIR.
Figure 7 shows a Loop Body transformed into Machine IR, MIR.
Figure 8 shows an Improved Loop Body in Machine IR, MIR'.
Figure 9 shows a Subgraph of Depth 2 for Covering Node n16.
Figure 10 shows Effect of Test Branc h in Improved Loop Body, MIR+.

DETAILED DESCRIPTION OF THE INVENTION

Predicated Execution (PE), associated hardware and software techniques, is one of the key features of new generation architecture emphasizing instruction - level parallelism. The requirements for guarded architecture to support PE including predicate registers, predicate defining operations, and additional field in instruction word for guarding predicate, however, cause a severe impact on existing Instruction Set Architecture (ISA). In one or more embodiments, the present invention involves new compiling techniques and associated hardware support for an alternate approach designed to gain or possibly exceed performance of explicitly guarded architecture while minimizing the impact on the ex isting architecture. The exemplary architecture that will be discussed herein for purposes of illustration is the SPARC™ architecture developed by Sun Microsystems, Inc. of Palo Alto, CA.

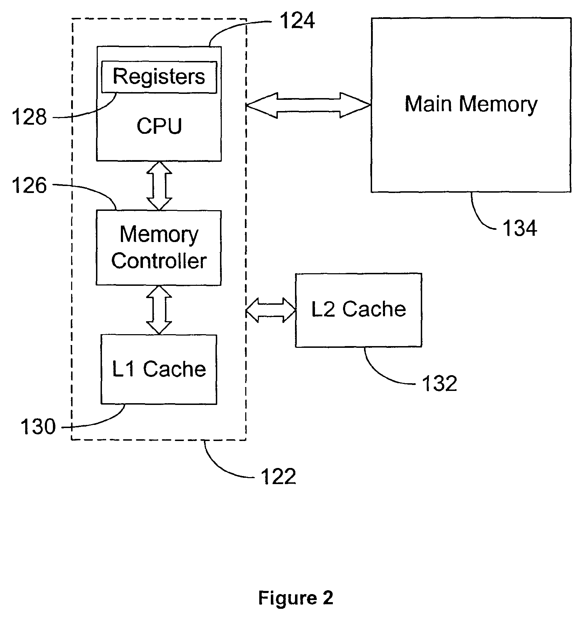

Referring to Figure 2, a block diagram of a processor in accorda nce with an embodiment of the present invention is shown. The processor (122) has, among other things, a CPU (124), a memory controller (126), and an on -chip cache memory (130). The microprocessor (122) is connected to external cache memory (132) and a main memory (134) that both hold data and program instructions to be executed by the microprocessor (122). Internally, the execution of program instructions is carried out by the CPU (124). Data needed by the CPU (124) to carry out an instruction are fetched by the memory controller (126) and loaded into internal registers (128) of the CPU (124).

The processor (122) includes n ew instructions that test a given conditional branch instruction to determine whether the branch will be taken or not. If the conditional branch tested is true (taken), then a general register specified as the destination register is set to 1 (true). Otherwise, the destination register is set to 0 (false).

The effect is to convert condition in the specified condition code registe r, floating-point as well as integer kind, (%fccn, %icc, and %xcc) into normalized Boolean data (1 or 0) in the destination register. The destination register subsequently acts as a predicate. This has the additional benefit of replacing condition codes with general registers and, thereby, eliminating the use of condition codes that degrade instruction -level parallelism. The Boolean data in general registers are normalized true or false so that Boolean operations can be performed in combination with othe r predicates using ordinary logical operations. Thus, the need for special operations dealing with predicates is avoided.

The new instructions may be, for example, Test Branch on Floating -Point Condition Codes (tfbx) and Test Branch on Integer Condition Codes (tbx). These instructions, described in detail below, improve the efficiency if -conversion on a traditional architecture without explicit support for predicated execution. In the defined instructions included below, notations used are consistent wi th the conventions of the SPARC™ Architecture Manual (Version 9). The exemplary instructions Test Branch on Floating -Point Condition Codes (tfbx) and Test Branch on Integer Condition Codes (tbx) have the following characteristics:

(1) Test Branch on Floating-Point Condition Codes
  Opcode tfb<x> %fccn,rd
where Condition x is one of

| u | Unordered |
| g | Greater |
| ug | Unordered or Greater |
| l | Less |
| ul | Unordered or Less |
| lg | Less or Greater |
| ne (nz) | Not Equal (Not Zero) |
| e (z) | Equal (Zero) |
| ue | Unordered or Equal |
| ge | Greater or Equal |
| uge | Unordered or Greater or Equal |
| le | Less or Equal |
| ule | Unordered or Less or Equal |
| o | Ordered |

  The condition codes (%fccn) are tested for the specified condition (x). If the condition is true then the general register designated the desti nation register (rd) is set to 1. Alternatively, if the condition is false, then the destination register is set to 0. The conditions always (a) and never (n) are not needed because the control edge associated can never be a control dependence edge.

(2) Test Branch on Integer Condition Codes
  Opcode tb<x> i_or_x_cc,rd
   where Condition x is one of

| ne (nz) | Not Equal (Not Zero) |
| e (z) | Equal (Zero) |
| g | Greater |
| le | Less or Equal |
| ge | Greater or Equal |
| l | Less |
| gu | Greater or Unsigned |
| leu | Less or Equal or Unsigne d |
| cc (geu) | Carry Clear (Greater or Equal or Unsigned) |
| cs (lu) | Carry Set (Less or Unsigned) |
| pos | Positive |
| neg | Negative |
| vc | Overflow Clar |
| vs | Overflow Set |

The condition codes (%icc or %xcc) are tested for the specified condition (x). As above, if the condition is true, then the general register designated the destination register (rd) is set to 1. Alternatively, if the condition is false, then the destination register is set to 0. The conditions always (a) and never (n) are not needed because the control edge associated can never be a control dependence edge.

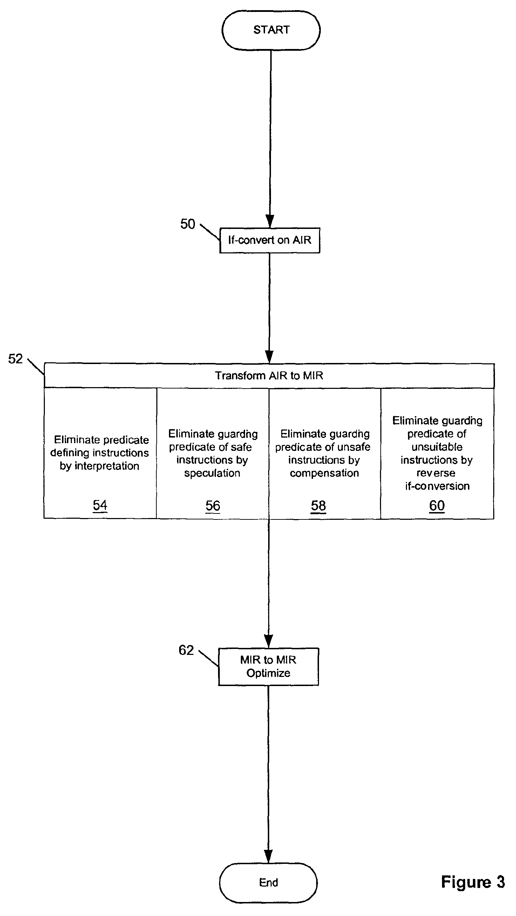

Referring to Figure 3, an overview of a process in accordance with an embodiment of the present invention is shown. The individual steps are introduced with reference to Figure 3 and each will b e described in more detail below. First, the process begins with if-converting on an abstract internal representation (AIR) (step 50) for a virtual machine with full guard support. Next, the if-conversion on AIR is transformed to a machine representation (MIR) (step 52) eliminating, in particular, guarding predicates. The AIR to MIR transformations consist of four parts.

First, the predicate defining instructions are eliminated by interpretation (step 54). Then, guarding predicates of safe instructions are eliminated by speculation (step 56) and guarding predicates of unsafe instructions are eliminated by compensation (step 58). Finally, guarding predicates of unsuitable instructions are eliminated by reverse if-conversion (step 60). Which instruction s constitute safe, unsafe, and unsuitable instructions will be discussed in more detail below.

After the predicate eliminations have been made, the resulting MIR is improved by applying specially designed transformations (step 62). In one or more embodiments, the discussed process converts predicated execution to static speculation without explicit predicate hardware. As mentioned earlier, predicated execution (PE) is a key feature of modern microprocessor architecture emphasizing instruction -level parallelism. As such, PE on guarded (predicated) architecture has been studied by many as a hardware -software combined technique for eliminating branching, *i.e.*, if-conversion. The performance is gained in several ways, ranging from software -pipeline of loop s with control dependence to selective elimination of mispredicting branch instructions.

However, the requirements for a guarded architecture to support PE severely impact existing instruction -set architecture (ISA). Specifically, a fully guarded architecture must include new predicate registers, predicate defining (setting) instructions, and an additional field in instruction word for addressing a guarding predicate.

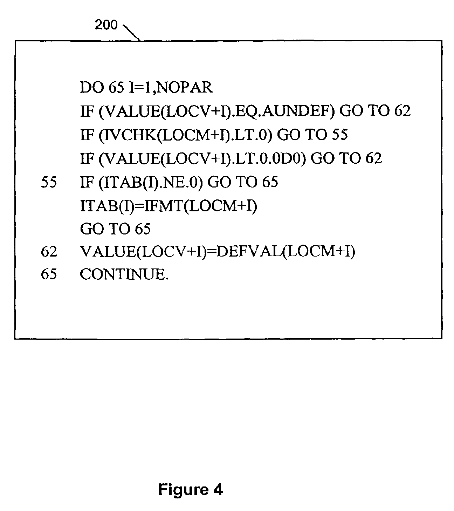

Referring to Figures 4-10, in one or embodiments, the present invention is a technique that minimizes ISA change in traditional RISC architecture while retaining the performance advantage of PE. The technique exploits PE in the existing architecture. This is achieved by transforming PE on guarded architecture into static speculation (SS) without the full guard support.

In the exemplary embodiment presented below, a SPARC ™ processor is used. Those skilled in the art will appreciate that the technique is equally applicable to other processors, possibly in conjunction with some notational modifications. When applied to SPARC ™ processors, the technique, referred to herein as RK for SPARC ™ (RK/Sparc), effectively captures the performance advantage of predicated execution on the existing SPARC ™-V9. Within the framework of RK/Sparc, the enhan cements made to the SPARC ™-V9 have a modest impact on the existing instruction set architecture. With these enhancements, RK/Sparc achieves performance comparable to that of a fully guarded architecture.

The technique builds on PE efforts, in which a gen eral, optimal algorithm for if-conversion on predicated architecture was discovered. Embodiments of the present invention extend PE to an unguarded architecture in such a way that explicit predicate hardware is superseded by static speculation using gener al registers as implicit predicates.

An essential idea is that if-conversion merely transforms control dependence (through branching) into data dependence (through predicates) and that a higher performance can result if such dependence is violated. This v iolation of dependence leads to static speculation of control kind. The RK/Sparc technique achieves this in three steps employing two representations, and transformations on these representations. The two representations, both low -level in character, are an abstract internal representation (AIR) and a physical SPARC ™-V9 machine representation (MIR). AIR represents a virtual SPARC ™-V9 architecture with full predicate support whereas MIR represents the existing SPARC ™-V9 unguarded architecture.

For a given a region R, for example, the body of an innermost loop, RK/Sparc transforms R in three steps:

Step 1. If-convert on AIR,
Step 2. Map from AIR to MIR, and
Step 3. Optimize MIR to an improved MIR'

Note that these three transform steps correspond to steps (50), (52), and (62) of Figure 3. An exemplary illustration is presented below regarding the effect of each step using textual representations of AIR, MIR and MIR' as transformations occur. The textual representations are annotated with data flow and other information to aid understanding.

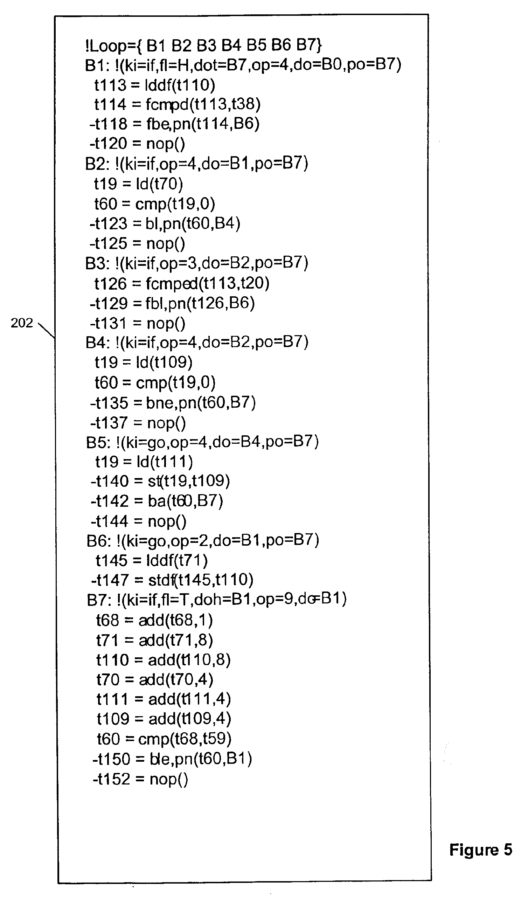

In this example, the loop shown in Figure 4 is used. Figure 4 shows an innermost loop (200). The internal representation (202) of the loop (200) prior to if-conversion is shown in Figure 5. In the textual repr esentation shown, instructions are expressed using numbered symbols tn for source and destination operands. To aid visual understanding destinations appear on the left hand side of the = symbol. Marked symbol, -tn, is used as a formal device for missing destination. Each basic block is annotated with its kind (ki), flag (fl) indicating region head/tail (H/T), number of operations (op), immediate dominator (do), and immediate postdominator (po). It is assumed that the SPARC ™-V9 AIR has a number of predicates (as many as needed, since virtual) and the proposed predicate defining instructions, Test Branch on Floating -Point Condition Codes (tfbx) and Test Branch on Integer Condition Codes (tbx). These instructions convert branching conditions into Boolean values in general registers as described.

Given a control flow graph G, the problem of if -conversion consists of two parts: (1) how to assign predicates to each node (basic block) of G and (2) how to place predicate defining operations such that predicates and their defining operations are minimal in number. PE algorithm solves both problems by decomposing the control dependence (CD) into two maps R and K such that R=inverse(K) o CD.

For each node x, R(x) gives the predicate P to be assigned to the node. For each predicate (p), the K set, K (p), gives defining operations to be placed.

This solution hinged on noticing there is an isomorphism between the equivalence classes of nodes with the same control dependence and the grouping of control dependence edges into sets (called K sets), each associated with a particular equivalence class. In this abstract view, predicates are merely names of equivalence classes and corresponding K sets.

When applied to this example, PE algorithm yields the two maps R and K shown in Table 1 and 2.

Table 1:

| R map of block to predicate p=R(B) | | | | | | | | | |
|---|---|---|---|---|---|---|---|---|---|
| B | 1 | 2 | 3 | 4 | 5 | 6 | 7 | 8 | 9 |
| P | 2 | 7 | 6 | 5 | 4 | 3 | 2 | 1 | 1 |

Table 2:

| K map of predicate to K set=K(p) | | | | | | | |
|---|---|---|---|---|---|---|---|
| P | 1 | 2 | 3 | 4 | 5 | 6 | 7 |
| K | {} | {8} | {3,1} | {-4,-8} | {2,-3,-8} | {-2,-8} | {-1} |

Blocks 8 (Start) and 9 (End) are introduced to augment the control flow graph in order to compute the control dependence (CD) as discussed in the technical report, "On Predicated Execution" by J.C.H. Park and M.S. Schlansker, Hewlett-Packard Laboratories, Palo Alto, CA, 1991, which is he reby incorporated by reference in its entirety.

Thus, for example, block B4 is assigned predicate P5=R(4). The defining (setting) instructions for predicate P5 is given by the set K(5) = {2, -3,-8}. Using the new test branch instructions introduced, one c an now give concrete meaning to this abstract result. Corresponding to the element -3, for example, the branch instruction of B3 is converted into the defining instruction p5=tfb1(t126,0) using the new Test Branch instruction tbfx described below. It is convenient to use the abstract form of tfbx with a second operand of 0 or 1 depending on the sign associated with the element of K set. Because this defining instruction is placed at B3, it must be guarded with the predicate P6 assigned to B3. Thus, the instruction is

p5=tfb1(t126,0) & p6

where the guarding predicate P6 follows the & separator.

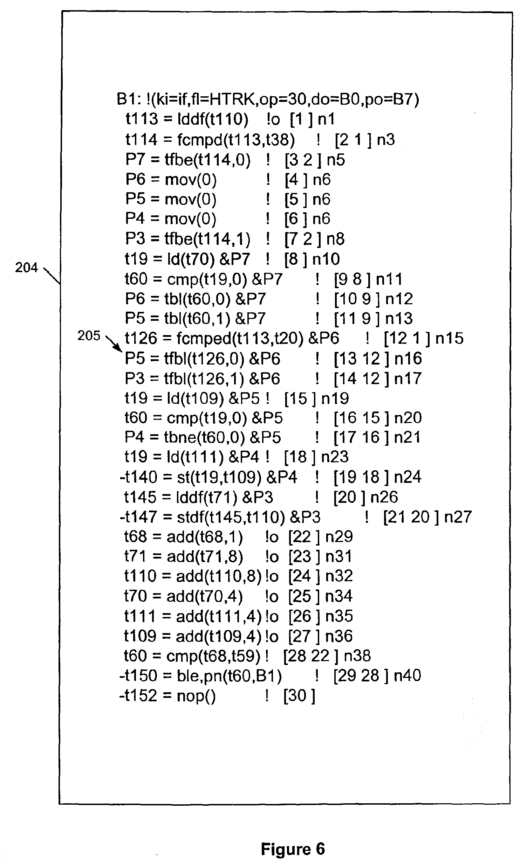

The K set element -8, where 8 refers to the start block, stands for a reset operations such as P6 = mov(0) of Figure 6. The requirement for reset operations is one of the subtle aspects of predication. A missing reset can cause incorrect behavior of a predicated code due to use of a predicate that has not been set earlier. The final result of PE, predication followed by collapse of multiple blocks into a straight line code, is shown in Figure 6.

The predicated code (204) in Figure 6 would apply if one were dealing with a fully guarded version of SPARC ™-V9. The effectiveness of RK/Sparc in eliminating the full predicate support is to be judged with respect to th is fully guarded code.

Referring to Figure 6, starting from a predicated code for a virtual guarded SPARC™ processor (204), various transformations are applied to eliminate guarding predicates. This second step of RK/Sparc transforms a code in an abstract representation (AIR) into that for the physical machine (MIR), namely SPARC™-V9. For this purpose, instructions are classified into four classes according to the different transformations to be applied:

a. defining instructions, Test Branch, to be tran sformed by interpretation,
b. safe instructions by speculation,
c. unsafe instructions by compensation, and
d. unsuitable instructions by reverse if-conversion (RIC).

Note that these classifications correspond to predicate elimination steps (54), (56), (58), and (60) of Figure 3. Classification of instructions into the four classes listed is a part of driving heuristics of RK/Sparc.

A store instruction may be taken to be either unsafe or unsuitable depending on its context as well as the effect of a choic e on the final outcome. Using the example in Figure 6, the four kinds of transformations listed above are illustrated.

Considering the 13$^{th}$ instruction (205) of the predicated code AIR (204) of Figure 6,

$$P5 = tfb1(t126,0) \& P6.$$

The guarding predicate is eliminated by speculating the guarded instruction tfbl and conditionally committing the appropriate result using movrnz. Thus, the above instruction is replaced by the sequence of unguarded instructions,

$$Q3 = tfb1(t126,0)$$

$$P5 = movrnz(P6, Q3).$$

Then, Test Branch tfbl is eliminated by interpretation with the pair,

$$Q3 = mov(1)$$

$$Q3 = mov1(t126,0).$$

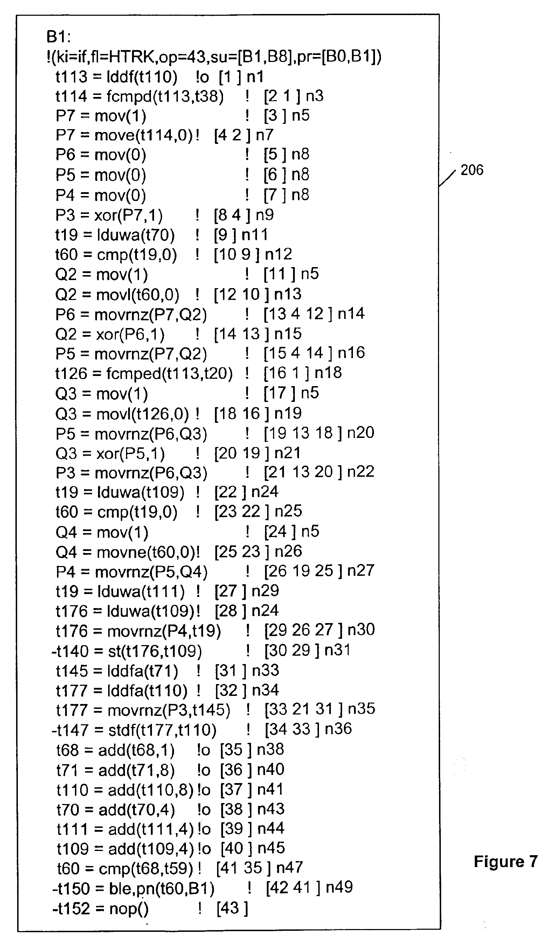

The result is the sequence of instructions 17 through 19 of MIR (Figure 7). Removing a guard in this manner leads naturally to speculation. Note that speculation of a predicate defining instruction involves a new work register like Q3. The prefix Q designates a Boolean value with the special property of "use - once". These properties are useful in the optimization techniques described later.

When both "taken" (n) and "not-taken" (-n) edges occur as elements of K sets, both being control dependence edges, the interpretation overhead is reduced by using xor to produce an inverted value. Our example involves three such cases leading to three xor operations involving p redicates in MIR (Figure 7).

Guarding predicates of instructions classified as safe are eliminated by speculation using a new working register (designated with W prefix) followed by a conditional commit using movrnz with the guarding predicate as the condi tion.

Certain instructions like store (st) are unsafe to speculate, since one cannot simply undo its effect using conditional commit. In the absence of predicated store instruction of general kind in SPARC ™-V9, compensation code is used. Two different methods are considered. One is to load the old value and conditionally change (using movnrz) the value to the new value. The other is to conditionally modify the address to either a harmless (predetermined) or the actual one in use. The former scheme is employed in the example Figure 7. Because the load instruction generated itself is speculative, a non -faulting kind such as ldda is used.

A load instruction can be both unsafe and unsuitable in speculation. SPARC™-V9 provides non-faulting load to avoid fatal exceptions but does not provide speculative kind that can defer unnecessary TLB or expensive cache miss. Large-scale experimental data is needed for the engineering trade -off between performance loss and complexity of introducing speculative load of various kinds in SPARC™-V9.

An instruction like integer divide is unsafe because it can cause divide check when speculated. Even if known to be safe, the instruction is unsuitable to speculate, when the execution probability associated is low, because o f dispatching restrictions like multi -cycle blocking. Such cases are handled by reverse if-conversion, in which branch is reintroduced to play the role of guarding the unsuitable instruction.

The final result (206) of applying these AIR -to-MIR transformations is shown in Figure 7. Comparing with the predicated code of Figure 6 the instruction count has increased by 43% (43/30). Such inefficiency is inherent in the approach taken. Transformations are applied in isolation, one at a time without considering the cumulative effect of others. Thus, after all such transformations are completed the result is improved by optimizing transformations discussed next.

In one embodiment, the new technique developed comprises rule -based automorphic MIR-to-MIR transformations based on symbolic analysis known as cover. These transformations are designed to improve a code in a variety of ways: (1) reduce instruction count such as elimination of predicate reset operations; (2) reduce dispatching cost by replacing condition al move with ordinary logical operations; (3) eliminate use of condition code; and the like. Transformations in our scheme are implemented as rewriting rules in terms of covering dag. This framework facilitates experimental analysis and incremental impro vement.

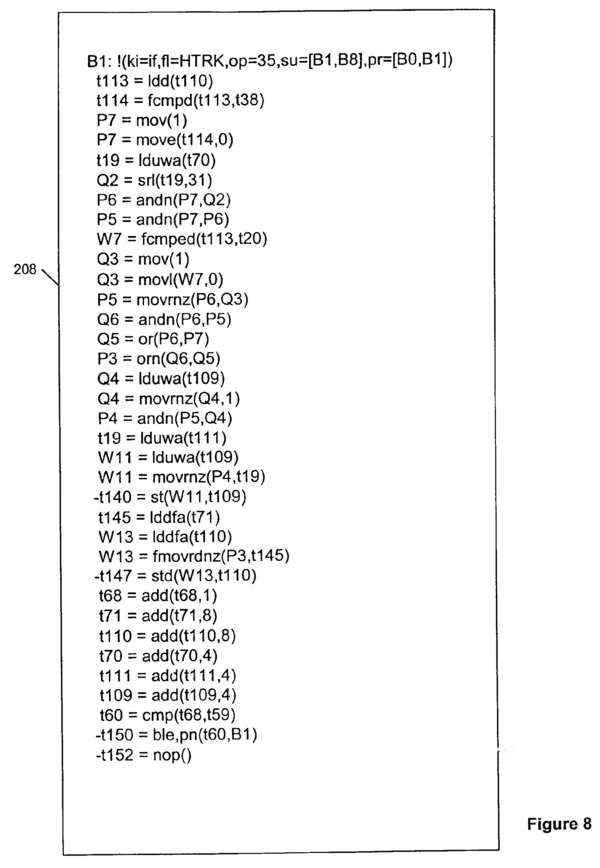

Being automorphic our transformations can be applied repeatedly in order to compound the effect of multiple transformations. Eventually, a fixpoint is reached implying that no further improvement is possible for the set of transformations at hand. This scheme when applied to MIR (206) of Figure 7 yields the improved MIR' (208) in Figure 8. Note that the instruction count has decreased by 23% (43/35).

The notion of cover together with an efficient ("almost linear") method for computing it is known in the art. A cover associates a symbolic expression with each text expression of a given code such that the two have the same value in any execution of the code. In particular, the covering symbolic expression conveniently captures dataflow information at any point in a code text.

This technique has been extended by combining it with partial evaluation in order to compute a cover with sufficient precision for improving predicated MIR as described subsequently. The quality of an analysis based on cover depends on its precision. The precision in our cover is due primarily to partial evaluation when values are known and detection/elimination of redundant instructions during cover construction. Consider the 15th instruction (207) of the predicated MIR (206) in Figure 7,

$$P5 = movrnz(P7,Q2) \: ! \: [15 \: 4 \: 14] \: n16$$

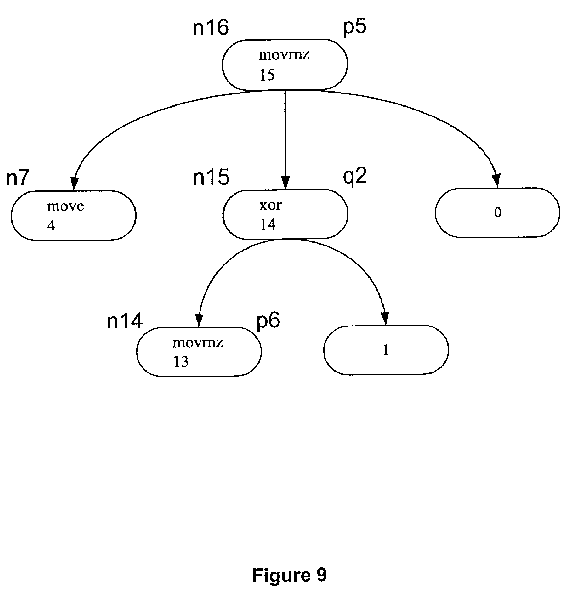

Internally the cover is constructed as a directed graph such that each instruction (the text expression on LHS of!) is associated with a node of this graph. For example, the subgraph rooted at the node n16 (shown in Figure 9) represents the covering symbolic expression associated with this instruction. Since each instruction is associated with a node of this cover, one can fully describe the graph by giving the tuple of instruction numbers such as [15 4 14] together with the node name. The tuple [15 4 14] has the meaning that the node of instruction 15 has successor nodes associated with instruction 4 and 14. Leaf nodes like constants and invariants do not appear in such tuples.

The correspondence between instructions and covering nodes is many -to-one, since instructions (text expressions) that evaluate to the same value are associated with the same node. This essential property of cover is useful in detection and elimination of redundant instructions.

Figure 9 shows a subgraph of depth 2 for Covering Node n16. For each node associated with a text expression, LHS of instruction (like P5), instruction (movnrz) and instruction number 15 (207) are shown together with the node name (n16).

Most of the overhead in predicated MIR is due to computations involving predicates, either directly (P) or indirectly through speculation (Q). The disclosed technique for improving code is based on the new idea of regarding certain cover involving only Boolean variables a s specifying an imaginary Boolean function of many variables and thus convert the problem of optimizing predicated MIR into that of circuit minimization problem in digital design.

There are two parts to this problem: (1) how a specific cover should be recognized and (2) what should be the optimized replacement?

To solve the first problem we introduce the notion of a signature, which captures essential aspect of a cover for identification purpose. A signature (of depth 2) is a string obtained by depth -first traversal of the cover (limiting the depth to 2). During the traversal visiting a node produces the string,

    (operation: definition operands.)

Then, visiting the operands (successor nodes separated by comma) recursively to the depth limit of 2 gives the full signature. Various notations are introduced such as * for designating any operation and ".." for nodes to be ignored. A leaf node is represented by its value. For example, the signature associated with the node n16 under discussion is

    (movrnz:P5 (*:P7 ..),(xor:Q2 (*:P6) (1) (0))

The second problem of finding optimized equivalent is tackled using Karnaugh map technique, reducing a Boolean function of up to 4 variables to a minimum number of basic logic operations (essential implicands of the map). The Boolean expression whose cover has the signature shown above is reduced in this manner to the replacement pattern,

$$P5 = andn(P7,P6)$$

This expression replaces the movrnz instruction associated with node n16. The pair, signature and the replacement pat tern, makes up a rule of our scheme. After all rules are applied, another pass of cover analysis is done to detect and eliminate useless instructions that occur as cumulative result of rules applied so far. These are identified by its covering node havin g no predecessors and the defining symbol (LHS of an instruction) being not liveout from the region at hand. The rule just discussed, for example, leads to elimination of **xor** instruction (14) and the use of speculated predicate Q2.

The combined effect of several rules of this kind is the optimized MIR' (208) shown in Figure 8. Note that the instruction count is decreased by 23% (43/35) when compared with the unoptimized MIR (206) of Figure 7. When compared with the guarded version AIR (204) of Figure 6 the inefficiency drops from 43% (43/30) in the unoptimized MIR (206) to 17% (35/30) in the optimized MIR' (208) in terms of instruction count.

The remaining inefficiency is architectural in nature, such as in having to convert floating point condition code to Boolean value in integer register and in handling unsafe store instructions. To cure such inefficiency the SPARC ™-V9 instruction set architecture is augmented with Test Branch instructions and Predicated Store. Instead of the instruction count as a measure, we next turn to more precise comparison based on software pipeline.

The results of predicated AIR (204) of Figure 6, RK -transformed MIR' (208) of Figure 8 and others are compared by computing the minimum initiation interval (MII) of software pipel ine. MII is the optimal limit of a software pipeline as in Modulo scheduling. Experiences with Modulo scheduling show that in most cases the schedule achieved, II (the stage length in cycle of software pipeline), matches or comes close to this limit, MII. Because the example loop does not involve recurrence, MII is simply given by the resource limit:

$$MII = \max(N_i / S_i),$$

where $S_i$ is the number of functional units that can service instructions of resource class i, and $N_i$ is the number of instructions of the same class. To simplify discussions we distinguish three kinds of resource, integer (A), floating - point (F) and memory (M). All instructions are assumed fully pipelined and have no dispatching restrictions like multi -cycle blocking or single -group. The resource classifications of all instructions that appear in this example are self -evident, except Conditional Move of different varieties, which are classified as M -class instructions.

The resource usage in several cases considered is summarized in Ta ble 3. In counting instructions the backedge (loop branch) and the associated delay slot are excluded because they do not participate directly in Modulo scheduling. Two cases have been included in the table in addition to the two cases, AIR and MIR'.

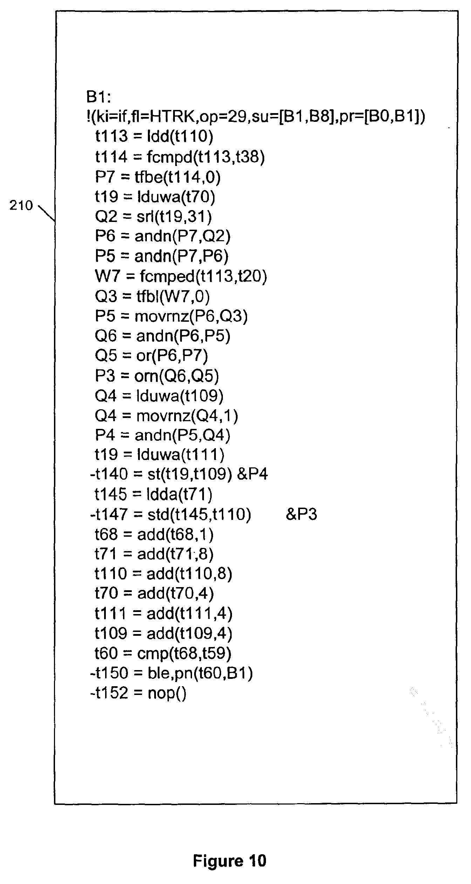

As discussed earlier, in handling conditional store with compensation code, instead of speculatively loading the old value (as in MIR') one can conditionally modify destination address of store to a harmless address (known as address jamming). This technique replaces a speculative load with a mov instruction for each occurrence of conditional store, thus changing the resource usage characteristics from M to A. The result is MIR". The case MIR+ (Figure 10) uses Test Branch and Predicated Store, part of SPA RC™-V9 enhancements.

Table 3:

| Resource class usage in various cases | | | | |
|---|---|---|---|---|
| Case | A | F | M | Total |
| AIR | 15 | 6 | 7 | 28 |
| MIR' | 16 | 2 | 15 | 33 |
| MIR" | 18 | 2 | 13 | 33 |
| MIR+ | 14 | 4 | 9 | 27 |

In calculating MII two different dispatching models are considered as summarized in Table 4 and 5. A model of pipe mix and issue width (scalarity) is denoted by using a notation like (2A 1F 2M) indicating that two A operations, one F operation and two M operations can be grouped together and issued per cycle. Individual terms that enter in MII calcu lation are shown under respective resource heading. These entries identify which resource is critical and how well the resource usage is balanced.

The performance gap between predicated execution (PE) on fully guarded virtual SPARC™-V9 (AIR) and static speculation (SS) on SPARC ™-V9 (various MIR) decreases as resource is added as we expect. In particular, the ratio MIR+/AIR in terms of MII drops from 1.2 (9/7.5) for (2A 1F 1M) to 0.93 (7/7.5) for (2A 1F 2M). That is, the performance gap of 20% vanishes for the model (2A 1F 2M). As additional factors are taken into account such as the difference in instruction fetch rate due to word size increase in a guarded architecture, the performance gap between PE and SS can actually become insignificant in practic e. Clearly, large-scale experiments with suitable compilers and simulators are required.

Note that choosing an appropriate transformation to apply can quickly become complex. For example, in the choice between two different approaches to handling conditional store, one or the other is better depending on resource usage and available resource. Even in the small example studied MIR' is better than MIR" in one case but not in the other. Such problems have the common characteristic of requiring knowledge of the final outcome of a choice before all the choices have been made. To avoid an approach relying on brute force backtracking, one must resort to heuristics based on large -scale experiments.

Also note that the MII tables contain fractional values like 7.5. Such cases are handled by unrolling the loop body before Modulo Scheduling is performed. Often this leads to a result effectively better than implied by the fractional value, since the loop count code and other induction code need only be repeated o nce per iteration of unrolled loop.

Table 4:

| MII for (2A 1F 1M) model | | | | | |
|---|---|---|---|---|---|
| Case | A | F | M | MII | Ratio |
| AIR | 7.5 | 6 | 7 | 7.5 | 1.00 |
| MIR' | 8 | 2 | 15 | 15 | 2.00 |
| MIR" | 9 | 2 | 13 | 13 | 1.73 |
| MIR+ | 7 | 4 | 9 | 9 | 1.20 |

Table 5:

| MII for (2A 1F 2M) model | | | | | |
|---|---|---|---|---|---|
| Case | A | F | M | MII | Ratio |
| AIR | 7.5 | 6 | 3.5 | 7.5 | 1.00 |
| MIR' | 8 | 2 | 7.5 | 8 | 1.07 |
| MIR" | 9 | 2 | 6.5 | 9 | 1.20 |
| MIR+ | 7 | 4 | 4.5 | 7 | 0.93 |

The RK technique transforms predicated execution (PE) on a fully guarded architecture into static speculation (SS) on an unguarded architecture. As illustrated by the example analyze d, the performance gap between SS an PE narrows provided the current SPARC -V9 architecture is enhanced in several ways. These enhancements include predicated store and control speculative load that are well known. In addition, new instructions, *i.e.*, test branch, are proposed.

With Test Branch and predicated store, the performance of SS comes witin 20% of PE in the "narrow" model, (2A 1F 1M). This gap vanishes when the issue width is increased to a "wider" model (2A 1F 2M). This occurs because the overhead of the speculation (increased instruction count) is absorbed by the increase in issue slots. The overhead of speculation thus has decreasing impact on performance as the issue width (scalarity) increases.

There are two kinds, Test Branch on Floating -Point Condition Codes (tbfx) and Test Branch on Integer Condition Codes (tbx). A Test Branch instruction,

tb<x> icc_or_xcc,%rd,

tests Integer Condition Code %icc or %xcc for the specified condition <x> and sets the destination register %rd to 1 (0) if tr ue (false). Floating -Point kind tbf<x> works in a similar manner. The condition <x> is one of many associated with Branch instruction as specified in the SPARC ™ Architecture Manual (Version 9). The effect of these Test Branch instructions is to convert a given branching condition into Boolean value in the specified destination register %rd.

In AIR, an abstract form using two source operands has been used, such as

$$P7 = tfbe(t114,0)$$

Test Branch in two source operand maps to the proposed instruction with one source operand using the second source operand to determine whether the condition is inverted or not. For example, the instruction tfbe(t114,0) above maps to

tfbne t1 14,P7 by inverting the condition "equal" to "not -equal".

These instructions are used as predicate defining instructions. In addition, since the predicate value is brought to a general register, the entire logical instructions set is available for general processing unlike the case of dedicated predicate registers without full logical in struction set support. The full logical instruction support allows the handling of optimizing predicated code as Boolean expression optimization.

Advantages of the present invention may include one or more of the following. In one or more embodiments, th e present invention presents an alternative approach that minimizes ISA changes in existing architecture yet gains performance advantages of fully predicated architecture.

The method RK/Sparc allows transforming predicated execution on a fully guarded architecture to static speculation without a full guard support. The technique is capable of yielding the performance advantage of predication execution on the existing SPARC ™-V9 with a few enhancements that have modest impact on the existing instruction set architecture.

These enhancements to the SPARC ™-V9 include a new class of instructions, namely, test branch. Test Branch converts branching condition based on condition codes to Boolean data in a general register so that full logical instruction set can be utilized to produce "optimal" code.

The performance gain achieved depends critically on the quality of analysis and transformations in use. The method RK/Sparc, thus, includes a new, powerful technique based on symbolic analysis (cover) for optimizin g predicated code. The technique, being general and extensible, can easily be adapted to tackle other problems that are text-rewriting in nature.

While the invention has been described with respect to a limited number of embodiments, those skilled in th e art will appreciate that other embodiments can be devised which do not depart from the scope of the invention as disclosed herein. Accordingly, the scope of the invention should be limited only by the attached claims.

**Claims**

1. An extensible rule -based technique for optimizing predicated code, comprising:

   if-converting an abstract internal representation; and
   mapping the if-conversion to a machine representation.

2. The technique of claim 1, further comprising:

   eliminating predicates from the mappe d if-conversion.

3. The technique of claim 1, the eliminating of predicates comprising:

   eliminating a predicate defining instruction by interpretation.

4. The technique of claim 1, the eliminating of predicates comprising:

   eliminating a guarding predicate of a safe instruction by speculation.

5. The technique of claim 1, the eliminating of predicates comprising:

   eliminating a guarding predicate of an unsafe instruction by compensation.

6. The technique of claim 1, the eliminating of predicates compri sing:

   eliminating a guarding predicate of an unsuitable instruction by reverse if-conversion.

7. The technique of claim 1, further comprising:

   optimizing the machine representation.

8. An extensible rule -based system for optimizing predicate code, com prising:

   a processor for executing instructions; and
   an instruction for

defining predicates;
testing a branch instruction; and
assigning a defined predicate to the branch instruction based on a result of the test.

9. An extensible rule -based method for op timizing predicate code, comprising:

defining a predicate;
testing a branch instruction; and
selectively assigning the defined predicate to the branch instruction based on a result of the test.

10. An apparatus for optimizing predicate code, comprising:

means for if-converting an abstract internal representation; and
means for mapping the if-conversion to machine representation.

11. The apparatus of claim 10, further comprising:

means for eliminating predicates from the mapped if -conversion.

12. The apparatus of claim 10, the eliminating of predicates comprising:

means for eliminating a predicate defining instruction by interpretation.

13. The apparatus of claim 10, the eliminating of predicates comprising:

means for eliminating a guarding predicate of a safe instruction by speculation.

14. The apparatus of claim 10, the eliminating of predicates comprising:

means for eliminating a guarding predicate of an unsafe instruction by compensation.

15. The apparatus of claim 10, the eliminating of predicate s comprising:

means for eliminating a guarding predicate of an unsuitable instruction by reverse if-conversion.

16. The apparatus of claim 10, further comprising:

means for optimizing the machine representation.

17. An extensible rule -based technique for optimizing predicated code, comprising:

if-converting an abstract internal representation;
mapping the if-conversion to a machine representation;
eliminating predicates from the mapped if -conversion,
wherein the eliminating of predicates, comprises

eliminating a predicate defining instruction by interpretation;
eliminating a guarding predicate of a safe instruction by speculation;
eliminating a guarding predicate of an unsafe instruction by compensation;
eliminating a guarding predicate of an unsuitable instruction by reverse if-conversion; and

optimizing the machine representation.

18. A technique of supporting predicated execution without explicit predicate hardware, comprising implementing a test branch instruction.

19. The technique of claim 18, w herein the test branch instruction converts a branching condition based on condition codes to Boolean data in a general register so that a full logical instruction set can be used to produce optimal code.

**20.** A system of supporting predicated execution wi thout explicit predicate hardware, comprising:

a processor for executing instructions; and
an instruction for

converting a branching condition based on condition codes to Boolean data in a general register so that a full logical instruction set produces op timal code; and
guarding a set of instructions unsuitable to speculate enclosed by a branch.

**21.** A method of supporting predicated execution without explicit predicate hardware, comprising implementing a test branch instruction.

**22.** The method of claim 21, wherein the test branch instruction converts a branching condition based on condition codes to Boolean data in a general register so that a full logical instruction set can be used to produce optimal code.

**23.** An apparatus of supporting predicated e xecution without explicit predicate hardware, comprising:

means for implementing a test branch instruction; and
means for eliminating predicates using the implemented test branch instruction.

**Figure 1**
**(Prior Art)**

**Figure 2**

START

50 — If-convert on AIR

52

| Transform AIR to MIR | | | |
|---|---|---|---|
| Eliminate predicate defining instructions by interpretation | Eliminate guarding predicate of safe instructions by speculation | Eliminate guarding predicate of unsafe instructions by compensation | Eliminate guarding predicate of unsuitable instructions by reverse if-conversion |
| 54 | 56 | 58 | 60 |

62 — MIR to MIR Optimize

End

**Figure 3**

```
        DO 65 I=1,NOPAR
        IF (VALUE(LOCV+I).EQ.AUNDEF) GO TO 62
        IF (IVCHK(LOCM+I).LT.0) GO TO 55
        IF (VALUE(LOCV+I).LT.0.0D0) GO TO 62
55      IF (ITAB(I).NE.0) GO TO 65
        ITAB(I)=IFMT(LOCM+I)
        GO TO 65
62      VALUE(LOCV+I)=DEFVAL(LOCM+I)
65      CONTINUE.
```

200

**Figure 4**

```
!Loop={ B1 B2 B3 B4 B5 B6 B7}
B1: !(ki=if,fl=H,dot=B7,op=4,do=B0,po=B7)
  t113 = lddf(t110)
  t114 = fcmpd(t113,t38)
 -t118 = fbe,pn(t114,B6)
 -t120 = nop()
B2: !(ki=if,op=4,do=B1,po=B7)
  t19 = ld(t70)
  t60 = cmp(t19,0)
 -t123 = bl,pn(t60,B4)
 -t125 = nop()
B3: !(ki=if,op=3,do=B2,po=B7)
  t126 = fcmped(t113,t20)
 -t129 = fbl,pn(t126,B6)
 -t131 = nop()
B4: !(ki=if,op=4,do=B2,po=B7)
  t19 = ld(t109)
  t60 = cmp(t19,0)
 -t135 = bne,pn(t60,B7)
 -t137 = nop()
B5: !(ki=go,op=4,do=B4,po=B7)
  t19 = ld(t111)
 -t140 = st(t19,t109)
 -t142 = ba(t60,B7)
 -t144 = nop()
B6: !(ki=go,op=2,do=B1,po=B7)
  t145 = lddf(t71)
 -t147 = stdf(t145,t110)
B7: !(ki=if,fl=T,doh=B1,op=9,do=B1)
  t68 = add(t68,1)
  t71 = add(t71,8)
  t110 = add(t110,8)
  t70 = add(t70,4)
  t111 = add(t111,4)
  t109 = add(t109,4)
  t60 = cmp(t68,t59)
 -t150 = ble,pn(t60,B1)
 -t152 = nop()
```

202

**Figure 5**

```
B1: !(ki=if,fl=HTRK,op=30,do=B0,po=B7)
 t113 = lddf(t110)    !o [1] n1
 t114 = fcmpd(t113,t38)    ! [2 1] n3
 P7 = tfbe(t114,0)  ! [3 2] n5
 P6 = mov(0)          ! [4] n6
 P5 = mov(0)          ! [5] n6
 P4 = mov(0)          ! [6] n6
 P3 = tfbe(t114,1)  ! [7 2] n8
 t19 = ld(t70) &P7  ! [8] n10
 t60 = cmp(t19,0) &P7       ! [9 8] n11
 P6 = tbl(t60,0) &P7        ! [10 9] n12
 P5 = tbl(t60,1) &P7        ! [11 9] n13
 t126 = fcmped(t113,t20) &P6    ! [12 1] n15
 P5 = tfbl(t126,0) &P6      ! [13 12] n16
 P3 = tfbl(t126,1) &P6      ! [14 12] n17
 t19 = ld(t109) &P5 ! [15] n19
 t60 = cmp(t19,0) &P5       ! [16 15] n20
 P4 = tbne(t60,0) &P5       ! [17 16] n21
 t19 = ld(t111) &P4 ! [18] n23
 -t140 = st(t19,t109) &P4   ! [19 18] n24
 t145 = lddf(t71) &P3       ! [20] n26
 -t147 = stdf(t145,t110) &P3        ! [21 20] n27
 t68 = add(t68,1)    !o [22] n29
 t71 = add(t71,8)    !o [23] n31
 t110 = add(t110,8) !o [24] n32
 t70 = add(t70,4)    !o [25] n34
 t111 = add(t111,4) !o [26] n35
 t109 = add(t109,4) !o [27] n36
 t60 = cmp(t68,t59) ! [28 22] n38
 -t150 = ble,pn(t60,B1)     ! [29 28] n40
 -t152 = nop()          ! [30]
```

204

205

**Figure 6**

```
B1:
!(ki=if,fl=HTRK,op=43,su=[B1,B8],pr=[B0,B1])
 t113 = lddf(t110)   !o  [1 ] n1
 t114 = fcmpd(t113,t38)    !  [2 1 ] n3
 P7 = mov(1)               !  [3 ] n5
 P7 = move(t114,0)!  [4 2 ] n7
 P6 = mov(0)               !  [5 ] n8
 P5 = mov(0)               !  [6 ] n8
 P4 = mov(0)               !  [7 ] n8
 P3 = xor(P7,1)      !  [8 4 ] n9
 t19 = lduwa(t70)    !  [9 ] n11
 t60 = cmp(t19,0)    !  [10 9 ] n12
 Q2 = mov(1)               !  [11 ] n5
 Q2 = movl(t60,0)  !  [12 10 ] n13
 P6 = movrnz(P7,Q2)      !  [13 4 12 ] n14
 Q2 = xor(P6,1)      !  [14 13 ] n15
 P5 = movrnz(P7,Q2)        !  [15 4 14 ] n16
 t126 = fcmped(t113,t20) !  [16 1 ] n18
 Q3 = mov(1)               !  [17 ] n5
 Q3 = movl(t126,0) !  [18 16 ] n19
 P5 = movrnz(P6,Q3)        !  [19 13 18 ] n20
 Q3 = xor(P5,1)      !  [20 19 ] n21
 P3 = movrnz(P6,Q3)        !  [21 13 20 ] n22
 t19 = lduwa(t109)  !  [22 ] n24
 t60 = cmp(t19,0)    !  [23 22 ] n25
 Q4 = mov(1)               !  [24 ] n5
 Q4 = movne(t60,0)!  [25 23 ] n26
 P4 = movrnz(P5,Q4)        !  [26 19 25 ] n27
 t19 = lduwa(t111)  !  [27 ] n29
 t176 = lduwa(t109)!  [28 ] n24
 t176 = movrnz(P4,t19)    !  [29 26 27 ] n30
-t140 = st(t176,t109)      !  [30 29 ] n31
 t145 = lddfa(t71)   !  [31 ] n33
 t177 = lddfa(t110)  !  [32 ] n34
 t177 = movrnz(P3,t145)   !  [33 21 31 ] n35
-t147 = stdf(t177,t110)     !  [34 33 ] n36
 t68 = add(t68,1)     !o  [35 ] n38
 t71 = add(t71,8)     !o  [36 ] n40
 t110 = add(t110,8)!o  [37 ] n41
 t70 = add(t70,4)     !o  [38 ] n43
 t111 = add(t111,4)!o  [39 ] n44
 t109 = add(t109,4)!o  [40 ] n45
 t60 = cmp(t68,t59) !  [41 35 ] n47
-t150 = ble,pn(t60,B1)        !  [42 41 ] n49
-t152 = nop()            !  [43 ]
```

／206

**Figure 7**

22

```
B1: !(ki=if,fl=HTRK,op=35,su=[B1,B8],pr=[B0,B1])
  t113 = ldd(t110)
  t114 = fcmpd(t113,t38)
  P7 = mov(1)
  P7 = move(t114,0)
  t19 = lduwa(t70)
  Q2 = srl(t19,31)
  P6 = andn(P7,Q2)
  P5 = andn(P7,P6)
  W7 = fcmped(t113,t20)
  Q3 = mov(1)
  Q3 = movl(W7,0)
  P5 = movrnz(P6,Q3)
  Q6 = andn(P6,P5)
  Q5 = or(P6,P7)
  P3 = orn(Q6,Q5)
  Q4 = lduwa(t109)
  Q4 = movrnz(Q4,1)
  P4 = andn(P5,Q4)
  t19 = lduwa(t111)
  W11 = lduwa(t109)
  W11 = movrnz(P4,t19)
-t140 = st(W11,t109)
  t145 = lddfa(t71)
  W13 = lddfa(t110)
  W13 = fmovrdnz(P3,t145)
-t147 = std(W13,t110)
  t68 = add(t68,1)
  t71 = add(t71,8)
  t110 = add(t110,8)
  t70 = add(t70,4)
  t111 = add(t111,4)
  t109 = add(t109,4)
  t60 = cmp(t68,t59)
-t150 = ble,pn(t60,B1)
-t152 = nop()
```

208

**Figure 8**

**Figure 9**

```
B1:
!(ki=if,fl=HTRK,op=29,su=[B1,B8],pr=[B0,B1])
 t113 = ldd(t110)
 t114 = fcmpd(t113,t38)
 P7 = tfbe(t114,0)
 t19 = lduwa(t70)
 Q2 = srl(t19,31)
 P6 = andn(P7,Q2)
 P5 = andn(P7,P6)
 W7 = fcmped(t113,t20)
 Q3 = tfbl(W7,0)
 P5 = movrnz(P6,Q3)
 Q6 = andn(P6,P5)
 Q5 = or(P6,P7)
 P3 = orn(Q6,Q5)
 Q4 = lduwa(t109)
 Q4 = movrnz(Q4,1)
 P4 = andn(P5,Q4)
 t19 = lduwa(t111)
-t140 = st(t19,t109) &P4
 t145 = ldda(t71)
-t147 = std(t145,t110)      &P3
 t68 = add(t68,1)
 t71 = add(t71,8)
 t110 = add(t110,8)
 t70 = add(t70,4)
 t111 = add(t111,4)
 t109 = add(t109,4)
 t60 = cmp(t68,t59)
-t150 = ble,pn(t60,B1)
-t152 = nop()
```

210

**Figure 10**